# EUROPEAN PATENT SPECIFICATION

(11) **EP 1 069 749 B1**
(45) Date of publication and mention of the grant of the patent: **10.12.2003**
(21) Application number: 99113491.7
(22) Date of filing: 13.07.1999
(51) Int. Cl.: H04M 1/274

(54) **A method for managing information stored in phone systems**
Verfahren zur Verwaltung von in Telefonsystemen gespeicherter Information
Procédé de gestion d'information stockée dans des systèmes téléphoniques

(43) Date of publication of application: 17.01.2001
(73) Proprietor: SIEMENS AKTIENGESELLSCHAFT, 80333 München (DE)
(72) Inventor: Laure,Richard, 9000 Aalborg (DK)

(56) References cited:
- EP-A- 0 792 056
- EP-A- 0 860 970
- WO-A-98/48552
- US-A- 5 465 401
- US-A- 5 537 608
- US-A- 5 708 804

## Description

### BACKGROUND OF THE INVENTION

The present invention relates to a method for managing information stored in phone systems having at least two different memory means and a display means, particularly digital mobile phone systems.

Although applicable to any phone system, the present invention and its underlying problems will be discussed with particular reference to GSM mobile phone systems.

In the following, the definitions listed in the table below are used:

| | |
|---|---|
| Entry | Stored information like in an address book or a phone book. Entries have a different format depending on their association to the internal memory or the SIM card or other memory. |
| Address book | Storage of entries in the internal memory |
| SIM card | Subscriber Identity Module. Can be used to store entries, which contain a tag and a number. |
| Group/Category | A group contains entries that can be linked by a common theme like Work, Friends or Bosch. It is then possible to associate certain functionalities to those groups, like a special ringing tone. |
| ADN | Abbreviated Dialling Numbers |
| FDN | Fixed Dialling Numbers |

### DEFINITIONS TABLE

Digital Cellular Telecommunications system (Phase 2+), Specification of the Subscriber Identity Module - Mobile Equipment (SIM - ME) Interface (GSM 11.11 version 6.1.0 Release 1997) inter alia discloses the way information is permanently stored in digital mobile phones.

Until now, one type of mobile phones only had a possibility to store phone numbers on the SIM card. It is possible to access a corresponding list of the numbers contained in each phone book as well as have a quick access to the numbers contained in the active list of numbers (ADN or FDN). A similar prior art is described in EP-A-0792056.

Other type of mobile phones can store numbers in the internal memory of the handset and on the SIM card. It is possible to regroup entries from the internal memory or the SIM card in groups/categories. Numbers from the SIM card and the internal memory are merged in one list. Groups/Categories are not listed in the merged list and are not used to structure the list.

Another particular type of mobile phones can store numbers on the SIM card and more information in the internal memory (name, number home, number at work, mobile number, address, etc.). It is not possible to create directly entries on the SIM card. They have first to be created in the internal memory and then copied to the SIM card. It not possible to create groups/categories with entries from SIM and entries from the internal memory. Entries from the SIM card have to be copied in the internal memory to be attached to a group. There is no merged list provided in this type of mobile phones.

### SUMMARY OF THE INVENTION

The present invention provides a method for managing information stored in phone systems, particularly digital mobile phone systems as defined in claim 1.

A particular advantage of the invention is that the user can access entries of different formats and alphabetically ordered at once. The groups are used to reduce the size of the list, get it better structured and therefore simplify the access to entries. When searching inside the list, it is possible to search after groups as well as entries.

The principal idea underlying the present invention is that it provides a new way of accessing the phone numbers and other information stored in a handset, f.e. on the SIM card and/or in the internal memory, namely in a merged list having entries and entry groups similar to a directory/subdirectory list in a personal computer.

In the method according to the invention, it is possible to store entries on at least two different memory means, f.e. the SIM card and in the internal memory. An entry in the internal memory contains different informations like name, home number, mobile number, work number, e-mail address, etc. It is further possible to create directly entries on the SIM card and in the internal memory. Groups of entries can be built with entries from the SIM card and entries from the internal memory.

The merged list is built containing all entries from the SIM card and the internal memory as well as all groups. All these information are alphabetically ordered. The merged list is displayed showing all entries not attached to a group and all groups. To get the content of a group the user selects the group. So, to summarise, the merged list contains groups and entries from the SIM card as well as from the internal memory, and the groups are used as (sub)directories to structure the list and entries, which are attached to groups and are not displayed in the list.

Preferred embodiments of the present invention are listed in the dependent claims.

According to a preferred embodiment said at least two different memory means comprise a SIM card and an internal memory chip.

According to a further preferred embodiment said merged list is alphabetically ordered.

According to a further preferred embodiment to get the names of the entries of a specific group displayed in the merged list, the group is selected by a selection means, preferably a cursor.

According to a further preferred embodiment to get the number belonging to a name displayed in the merged list, the name is selected by a selection means, preferably a cursor.

### BRIEF DESCRIPTION OF THE DRAWINGS

The present invention will become more fully understood by the following detailed description of preferred embodiments thereof in conjunction with the accompaying drawings, in which:
- Fig. 1: shows an example of a display list in form of a merged list according to an embodiment of the invention; and
- Fig. 2: shows an example of a group folder of the merged list of Fig. 1.

### DESCRIPTION OF THE PREFERRED EMBODIMENTS

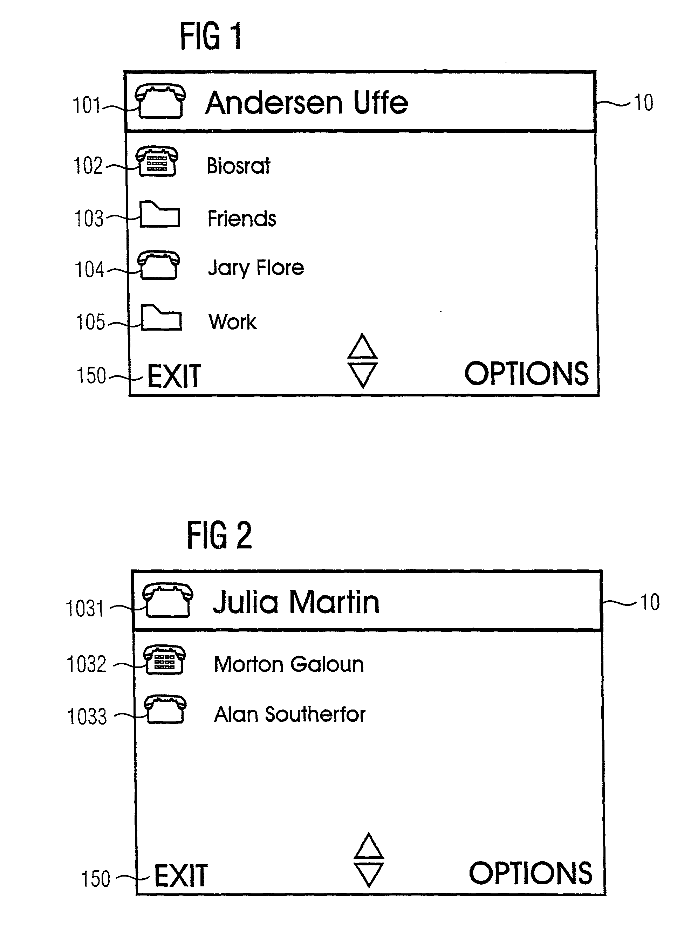

Fig. 1 shows an example of a display list in form of a merged list according to an embodiment of the invention, shown on a system display 10 of a mobile phone.

According to this embodiment the phone system is a digital mobile phone system having two different memory means, namely a SIM card and an internal memory chip.

The user can store tags (names) and associated numbers on the SIM card and more information in the internal memory (name, number home, number at work, mobile number, address, etc.). Thus, entries comprising at least a name and a phone number may be created.

Immediately when creating entries or at a later, the user can build groups of entries consisting of entries of either one of the two different memory means. This results in a state where either all entries belong to one or more groups or in a state where only some entries belong to one or more groups and some entries are not attached to any group.

For display in the display 10 of the mobile phone, the user applies a known input procedure by use of a command line to be activated by a cursor which results in a merged list containing entries not arranged in groups and groups from both memory means being internally provided by means of the system processor and made available for display, f.e. for showing the names of the entries not arranged in a group and the names of built groups on the display screen.

As depicted in Fig. 1, all entries and groups 101, 102, 103, 104, 105 are listed in the merged list in an alphabetically ordered form. To create a visible difference between all items, an icon is placed in front of each item.

A folder icon is used for the groups friends 103 and work 105, a full phone icon is used for the entries not belonging to a group which are on the SIM card (the SIM card is an external equipment), and an empty phone icon is used for entries entries not belonging to a group which are in the internal memory (they are part of the handset).

In Figure 1, Andersen Uffe 101 and Jary Flore 104 are stored in the internal memory whereas Biosrat 102 is on the SIM card. Friends 103 and Work 105 are groups.

When a group is selected by the cursor, the entry names belonging to this group are listed as shown in Fig. 2 which is an example of the group folder friends 103 of the merged list of Fig. 1. They are not listed outside of the group.

More particularly, after selecting Friends 103, for example, three entries are listed: Julia Martin 1031, Morton Galoun 1032, and Alan Southerfor 1033, namely the two 1031 and 1033 from the infernal memory and the one 1032 from the SIM card.

In order to get the number and additionally stored information belonging to a name displayed in the merged list, the name is selected by the cursor, and a level for showing such details is entered which, however, is not illustrated here.

Although the present invention has been described with respect to preferred embodiments thereof, it should be understood that many modifications can be performed without departing from the scope of the invention as defined by the appended claims.

Particularly, the kind and amount of information stored in the merged list is not limited to the shown example.

Moreover, altough structuring the merged list using groups is a functionality designed for mobile phones, the invention is applicable to stationary phones as well.

Finally, the arrangement and levels of the merged list may be altered in many ways.

## Claims

1. A method for managing information stored in phone systems having at least two different memory means and a display means, particularly digital mobile phone systems, comprising the steps of:
creating entries in both memory means, said entries comprising at least a name and a phone number;
building groups of entries consisting of entries of either one of the two different memory means;
providing a merged list containing entries not arranged in groups and groups from both memory means; and
displaying the merged list for showing the names of the entries not arranged in a group and the names of built groups.

2. The method according to claim 1, wherein said at least two different memory means comprise a SIM card and an internal memory chip.

3. The method according to claim 1 or 2, wherein said merged list is alphabetically ordered.

4. The method according to claim 1, 2 or 3, wherein to get the names of the entries of a specific group displayed in the merged list, the group is selected by a selection means, preferably a cursor.

5. The method according to one of the preceeding claims, wherein to get the number belonging to a name displayed in the merged list, the name is selected by a selection means, preferably a cursor.

## Patentansprüche

1. Verfahren zum Verwalten von Informationen, die in Telefonsystemen mit mindestens zwei unterschiedlichen Speichermitteln und einem Anzeigemittel gespeichert sind, insbesondere digitalen Mobiltelefonsystemen, mit folgenden Schritten:
Erstellen von Einträgen in beiden Speichermitteln, wobei die Einträge mindestens einen Namen und eine Rufnummer umfassen;
Aufbauen von Gruppen von Einträgen, die aus Einträgen von einem der beiden unterschiedlichen Speichermitteln bestehen;
Bereitstellen einer vereinigten Liste mit nicht in Gruppen angeordneten Einträgen und Gruppen aus beiden Speichermitteln; und
Anzeigen der vereinigten Liste zum Darstellen der Namen der nicht in einer Gruppe angeordneten Einträge und der Namen aufgebauter Gruppen.

2. Verfahren nach Anspruch 1, wobei die mindestens zwei unterschiedlichen Speichermittel eine SIM-Karte und einen internen Speicherbaustein umfassen.

3. Verfahren nach Anspruch 1 oder 2, wobei die vereinigte Liste alphabetisch geordnet ist.

4. Verfahren nach Anspruch 1, 2 oder 3, wobei, um die Namen der Einträge einer in der vereinigten Liste angezeigten bestimmten Gruppe zu erhalten, die Gruppe durch ein Auswählmittel, vorzugsweise einen Cursor, ausgewählt wird.

5. Verfahren nach einem der vorhergehenden Ansprüche, wobei, um die zu einem in der vereinigten Liste angezeigten Namen gehörende Nummer zu erhalten, der Name durch ein Auswählmittel, vorzugsweise einen Cursor, ausgewählt wird.

## Revendications

1. Procédé de gestion des informations stockées dans des systèmes téléphoniques possédant au moins deux moyens à mémoire différents et un moyen d'affichage, particulièrement des systèmes téléphoniques mobiles numériques, comprenant les étapes consistant à:
créer des entrées dans les deux moyens à mémoire, lesdites entrées comprenant au moins un nom et un numéro de téléphone;
construire des groupes d'entrées constitués d'entrées de l'un ou l'autre des deux moyens à mémoire différents;
créer une liste fusionnée contenant des entrées non agencées en groupes et des groupes en provenance des deux moyens à mémoire; et
afficher la liste fusionnée pour montrer les noms des entrées non agencées en groupes et les noms des groupes construits.

2. Procédé selon la revendication 1, dans lequel lesdits au moins deux moyens à mémoire différents comprennent une carte SIM et une puce de mémoire interne.

3. Procédé selon la revendication 1 ou 2, dans lequel ladite liste fusionnée est par ordre alphabétique.

4. Procédé selon la revendication 1, 2 ou 3, dans lequel, pour obtenir les noms des entrées d'un groupe spécifique affiché dans la liste fusionnée, le groupe est sélectionné par un moyen de sélection, de préférence un curseur.

5. Procédé selon l'une des revendications précédentes, dans lequel, pour obtenir le numéro appartenant à un nom affiché dans la liste fusionnée, le nom est sélectionné par un moyen de sélection, de préférence un curseur.
